# EUROPEAN PATENT SPECIFICATION

(11) **EP 3 400 382 B1**
(45) Date of publication and mention of the grant of the patent: **16.10.2019**
(21) Application number: 16709478.8
(22) Date of filing: 08.01.2016
(51) Int. Cl.: F02M 55/00, F02M 55/02, F16L 19/06

(54) **PIPE ASSEMBLY AND METHOD FOR CONNECTING PIPE ASSEMBLY**
ROHRANORDNUNG UND VERFAHREN ZUM VERBINDEN EINER ROHRANORDNUNG
ENSEMBLE TUYAU ET PROCÉDÉ DE RACCORDEMENT D'ENSEMBLE TUYAU

(43) Date of publication of application: 14.11.2018
(73) Proprietor: Wärtsilä Finland Oy, 65100 Vaasa (FI)
(72) Inventor: GRÖNLUND, Fredrik, 65100 Vaasa (FI); EKLUND, Kjell, 65100 Vaasa (FI); LAAKSO, Ossi, 65100 Vaasa (FI)
(74) Representative: Berggren Oy, Helsinki & Oulu
(86) International application number: PCT/FI2016/050006
(87) International publication number: WO 2017/118776

(56) References cited:
- WO-A1-2008/059490
- WO-A1-2011/042718
- US-A1- 2005 082 823
- US-A1- 2014 360 469
- US-A1- 2015 130 181
- US-B2- 9 228 551

## Description

### Technical field of the invention

The present invention relates to a pipe assembly for a high-pressure fluid system in accordance with the preamble of claim 1. The invention also concerns a method for connecting a pipe assembly in a high-pressure fluid system to an adjacent component as defined in the other independent claim.

### Background of the invention

In large internal combustion engines, such as ship or power plant engines, which are operated using liquid fuels, the fuel is injected into cylinders or prechambers of the engine at a very high pressure. Typically the pressure after a fuel injection pump, in a fuel rail of a common rail fuel injection system or in a similar fuel accumulator is in the range of 800 to 3000 bar. The high injection pressures set high standards for the sealing of different parts of a fuel injection system. The components of a fuel injection system are connected to each other using high-pressure pipes. Because of the high pressures, different standards typically require that double wall pipes are used. Each high-pressure pipe forms an inner pipe, which is surrounded by an outer pipe. A leakage channel is formed between the inner pipe and the outer pipe for collecting possible leakage flow. The high-pressure pipes are connected to each other or to other components of the fuel injection system, such as fuel rails or fuel injectors, via pipe connectors. Each end of a high-pressure pipe is provided with a conical or a spherical sealing surface, which is arranged against a sealing surface of a pipe connector. A mounting sleeve is arranged around each end of a high-pressure pipe for attaching the high-pressure pipe to the pipe connector. Since the sealing surfaces of the high-pressure pipes are arranged on the outer surfaces of the high-pressure pipes, they are exposed to external impacts during transportation and assembly. Because of the high pressures in the fuel injection system, even small scratches on a sealing surface can affect the functioning of the sealing. The high-pressure pipes also need to be removed periodically from the fuel injection system for allowing servicing of various components of the fuel injection system, and also then there is a risk of damaging of the sealing surfaces. Similar problems also occur in other high-pressure fluid systems.

### Summary of the invention

An object of the present invention is to provide an improved pipe assembly for a high-pressure fluid system. The characterizing features of the pipe assembly according to the invention are given in the characterizing part of claim 1. Another object of the invention is to provide a method for connecting such a pipe assembly in a high-pressure fluid system to an adjacent component that is provided with a sealing surface. The characterizing features of the method are given in the other independent claim.

The pipe assembly according to the invention comprises a high-pressure pipe for carrying a high-pressure fluid, the high-pressure pipe having a first end and a second end, the first end of the high-pressure pipe being provided with an external sealing surface encircling the first end of the high-pressure pipe. The pipe assembly further comprises a protector element, which is arranged around the first end of the high-pressure pipe for covering the sealing surface and configured to yield for revealing the sealing surface when the protector element is compressed in the longitudinal direction of the high-pressure pipe, and the protector element comprises a spring portion.

The protector element of the pipe assembly protects the sealing surface of the high-pressure pipe during transportation. Because of the resilient protector element, the high-pressure pipe can be connected to an adjacent component of the fluid system without removing the protector element. The protector element therefore protects the sealing surface also during assembly of the fluid system and when the high-pressure pipe is disconnected from the adjacent component. Also the second end of the high-pressure pipe can be provided with a similar sealing surface and protector element.

According to an embodiment of the invention, the protector element extends in the longitudinal direction of the high-pressure pipe over the whole sealing surface when not being compressed.

According to an embodiment of the invention, the protector element is a cylindrical part.

According to an embodiment of the invention, the protector element comprises a portion that forms a helical spring.

According to an embodiment of the invention, the protector element forms part of a sleeve that is attached to the high-pressure pipe. The protector element can be a unitary part of the sleeve or a separate part attached to the sleeve. According to an embodiment of the invention, the sleeve is configured to transmit a clamping force to the high-pressure pipe for holding the sealing surface of the high-pressure pipe against an adjacent sealing surface.

According to an embodiment of the invention, the pipe assembly comprises an outer pipe that is arranged around the high-pressure pipe and a leakage channel that is formed between the high-pressure pipe and the outer pipe, and the sleeve is configured to establish fluid communication between the leakage channel between the high-pressure pipe and the outer pipe and a leakage channel that is formed in an adjacent component of the fluid system.

The fuel injection system according to the invention comprises a pipe assembly defined above.

According to an embodiment of the invention, the pipe assembly is connected to a connector piece that is provided with a sealing surface.

The method according to the invention comprises the steps of aligning the sealing surface of the high-pressure pipe with the sealing surface of the adjacent component, arranging the protector element against the adjacent component, pushing the pipe assembly in the longitudinal direction of the high-pressure pipe for compressing the spring portion of the protector element, and attaching the pipe assembly to the adjacent component.

### Brief description of the drawings

Embodiments of the invention are described below in more detail with reference to the accompanying drawings, in which
Fig. 1 shows schematically an example of a fuel injection system of a piston engine,
Fig. 2 shows an exploded view of a pipe assembly according to an embodiment of the invention,
Fig. 3 shows another exploded view of the pipe assembly of figure 2,
Fig. 4 shows a cross-sectional view of the pipe assembly of figures 2 and 3,
Fig. 5 shows a cross-sectional view of the pipe assembly of figures 2 to 4 connected to a connector piece,
Fig. 6 shows a pipe assembly according to another embodiment of the invention, and
Fig. 7 shows a protector element of the pipe assembly of figure 6.

### Description of embodiments of the invention

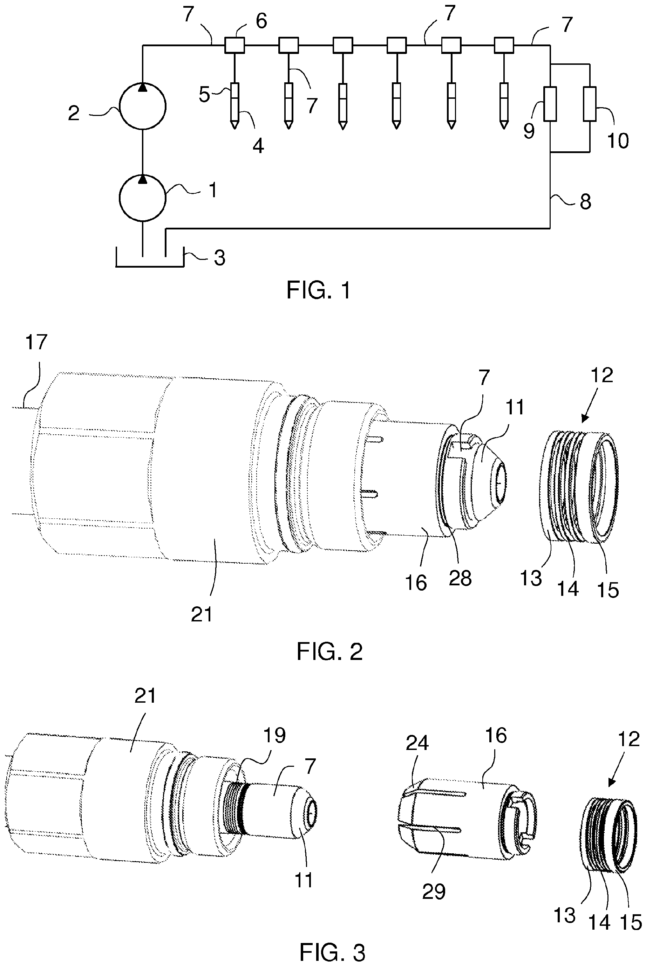

Figure 1 shows schematically an example of a fuel injection system of a piston engine. The engine is a large internal combustion engine, such as a main or an auxiliary engine of a ship or an engine that is used at a power plant for producing electricity. The cylinder bore of the engine is at least 150 mm. The fuel injection system of figure 1 is configured for a six-cylinder engine. However, the engine could comprise any reasonable number of cylinders.

The fuel injection system of figure 1 is used for injecting liquid fuel, such as light fuel oil or marine diesel oil, into the cylinders of the engine. The fuel can be injected either directly into the cylinders or into prechambers. The fuel injection system comprises one fuel injector 4 for each cylinder of the engine. The fuel is stored in a fuel tank 3, from which it is supplied to the fuel injectors 4. The fuel injection system of figure 1 comprises a low-pressure pump 1 and a high-pressure pump 2. The low-pressure pump 1 raises the pressure of the fuel to a first pressure level and supplies the fuel to the high-pressure pump 2. The high-pressure pump 2 raises the pressure of the fuel from the first pressure level to a second pressure level, which is higher than the first pressure level. The first pressure level can be, for instance, in the range of 5 to 15 bar. The second pressure level is in a range that is suitable for direct fuel injection or fuel injection into prechambers. The second pressure level can be, for instance, in the range of 500 to 3000 bar. High-pressure pipes 7 connect components of the fuel injection system on the high-pressure side of the fuel injection system to each other. The high-pressure side is located downstream from the high-pressure pump 2. In the fuel injection system of figure 1, each fuel injector 4 is provided with an own fuel accumulator 5 for storing the fuel to be injected. The fuel accumulator 5 is arranged in connection with the fuel injector 4. The fuel injection system comprises a plurality of connector pieces 6. The connector pieces 6 are used for connecting the high-pressure pipes 7 to each other. In the fuel injection system of figure 1, each connector piece 6 is configured for receiving three high-pressure pipes 7. The first connector piece 6 in the flow direction of the fuel connects the high-pressure pump 2 to one of the fuel injectors 4. The first connector piece 6 is also connected to the following connector piece 6 in the flow direction of the fuel. Each connector piece 6 between the first connector piece 6 and the last connector piece 6 forms a link between the preceding connector piece 6, the following connector piece 6 and a fuel injector 4.

The fuel injection system further comprises a circulation valve 9. The last connector piece 6 in the flow direction of the fuel which connects the circulation valve 9 to the last fuel injector 4 and to the preceding connector piece 6. The circulation valve 9 can be used for circulating fuel from the high-pressure side of the fuel injection system to the fuel tank 3, for instance for heating the fuel before starting the engine. A safety valve 10 is arranged in parallel with the circulation valve 9. The safety valve 10 maintains the pressure on the high-pressure side of the fuel injection system below a predetermined maximum value. A return duct 8 connects the circulation valve 9 and the safety valve 10 to the tank 3. The return duct 8 is on a low-pressure side of the fuel injection system.

The high-pressure side of the fuel injection system of figure 1 is provided with double-wall pipes. The high-pressure pipes 7 of the fuel injection system are thus surrounded by outer pipes (not shown in figure 1). The outer pipes prevent uncontrolled fuel leakage from the high-pressure pipes 7 and increase the fire safety of the fuel injection system and protect the operators of the engine. A leakage channel is arranged between each high-pressure pipe 7 and the surrounding outer pipe for collecting leaking fuel. The fuel injection system can comprise leakage indicators for detecting a leakage in a high-pressure pipe or in a pipe joint. The leakage indicators can be arranged, for instance, in the pipe connectors 6.

Figure 2 shows an exploded view of part of a pipe assembly according to an embodiment of the invention. The pipe assembly comprises a high-pressure pipe 7, which could be part of the fuel injection system of figure 1. However, the pipe assembly according to the invention could also be used in many other types of fuel injection systems. For instance, the fuel injection system could be a common rail system that is provided with one or more fuel rails, which supply fuel to a group of fuel injectors. The pipe assembly according to the invention is also suitable for many other high-pressure fluid systems. The expression "high-pressure fluid system" refers here to a fluid system, where the pressure is at least 100 bar. The fluid can be either liquid or gas. The expression "high-pressure pipe" refers to a pipe that is configured to carry a fluid under a pressure of at least 100 bar.

The pipe assembly according to the invention comprises a high-pressure pipe 7. The high-pressure pipe 7 comprises a first end and a second end. At least the first end of the high-pressure pipe 7 is provided with an external sealing surface 11, but both ends of the high-pressure pipe 7 can be provided with similar sealing surfaces 11. The sealing surface 11 is configured to be arranged against another sealing surface of the fluid system. The expression "external sealing surface" refers here to a surface that faces outwards from the longitudinal center axis of the high-pressure pipe 7. The sealing surface 11 encircles the first end of the high-pressure pipe 7. If the pipe assembly is used in a fuel injection system, the other sealing surface can be arranged, for instance, in a connector piece 6 or in a fuel accumulator 5. The sealing surface 11 of the high-pressure pipe 7 can be, for instance, a conical or spherical surface. Since the sealing surface 11 is on the outer surface of the high-pressure pipe 7, it is exposed to external impacts during transportation and/or assembly if not protected.

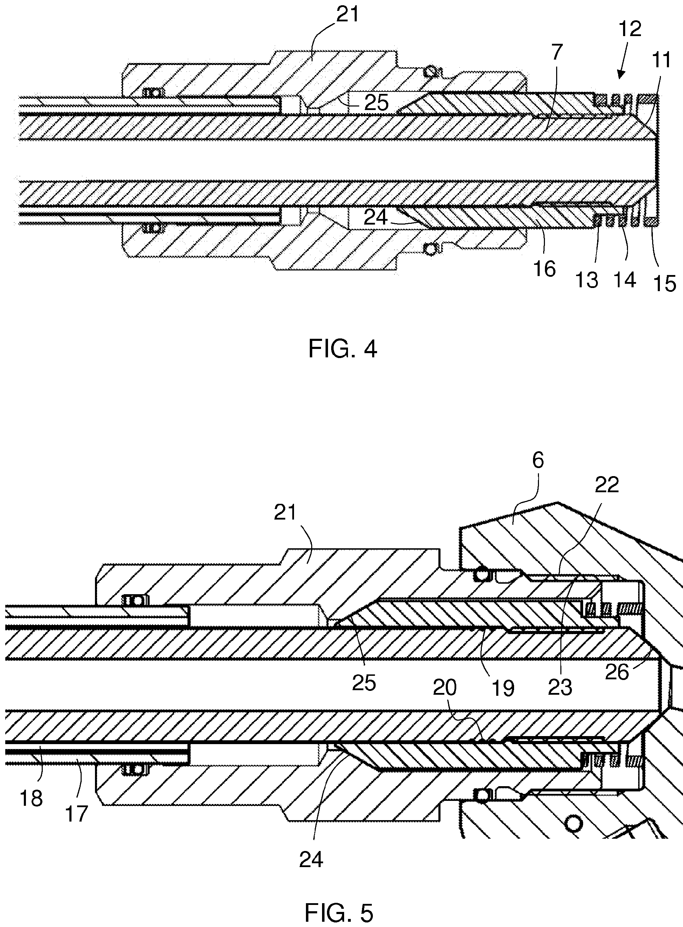

For protecting the sealing surface 11 of the high-pressure pipe 7, the pipe assembly according to the invention comprises a protector element 12. The protector element 12 is a resilient element that is arranged around the first end of the high-pressure pipe 7 for covering the sealing surface 11. If the second end of the high-pressure pipe 7 is provided with a similar sealing surface 11 as the first end, also the second end of the high-pressure pipe 7 can be provided with a similar protector element 12. In figures 2 and 3, the protector element 12 is shown as removed from the pipe assembly. Figures 4 and 5 show the protector element 12 being attached to the pipe assembly. The protector element 12 is configured to yield when it is compressed in the longitudinal direction of the high-pressure pipe 7. When the protector element 12 is compressed, it shortens and thus reveals the sealing surface 11 of the high-pressure pipe 7. When the protector element 12 is uncompressed, it extends in the longitudinal direction of the high-pressure pipe 7 over the whole sealing surface 11. It thus covers the whole sealing surface 11 when seen from a radial direction. In the embodiments of the figures, the protector element 12 is a cylindrical part.

In the embodiment of figures 2 to 5, the protector element 12 comprises an attachment portion 13, a spring portion 14 and a protecting portion 15. The attachment portion 13 is configured to allow attachment of the protector element 12 to the high-pressure pipe 7. In the longitudinal direction of the high-pressure pipe 7, it is arranged closest to the second end of the high-pressure pipe 7. The spring portion 14 forms a middle part of the protector element 12. In the embodiment of figures 2 to 5, the spring portion 14 is formed as a helical spring. The spring portion 14 allows yielding of the protector element 12. The length of the spring portion 14 is selected such that in the compressed state of the protector element 12 the sealing surface 11 of the high-pressure pipe 7 can be engaged with a sealing surface of an adjacent component of the fluid system. The stiffness of the spring portion 14 is selected such that the pipe assembly is easy to connect to an adjacent part of a fluid system but the sealing surface 11 of the high-pressure pipe 7 is not easily unintentionally revealed. The protecting portion 15 is configured to protect the sealing surface 11. The width of the protecting portion 15 in the longitudinal direction of the protector element 12 is preferably at least the same as the width of the sealing surface 11 in the longitudinal direction of the high-pressure pipe 7. However, it may not be possible or feasible to make the protecting portion 15 of the protective element 12 so wide. Therefore, the protecting portion 15 can also be narrower. The protecting portion 15 is not necessary, but the spring portion 14 may be made longer and the spring portion 14 may adequately protect the sealing surface 11. The protector element 12 is configured to be fully compressed with a force of 5-20 N. This allows easy mounting of the pipe assembly but prevents unintentional compression of the protector element 12 thus providing good protection of the sealing surface 11 of the high-pressure pipe 7.

The pipe assembly of figures 2 to 5 is used in a fluid system that is provided with double-wall pipes. Therefore, the high-pressure pipe 7 of the pipe assembly comprises an outer pipe 17. A leakage channel 18 is formed between the high-pressure pipe 7 and the outer pipe 17. In case of leakage of the high-pressure pipe 7, the leaking fluid is collected into the leakage channel 18. The outer pipe 17 prevents the high-pressure fluid from being sprayed directly outside the fluid system. This is important especially in case the fluid in the fluid system is inflammable or toxic. The outer pipe 17 is shorter than the high-pressure pipe 7, and the high-pressure pipe 7 therefore protrudes out of the outer pipe 17. For allowing attachment of the high-pressure pipe 7 to a connector piece 6, which is shown in figure 5, or to some other component of a fluid system, the pipe assembly is provided with a sleeve 16, which is arranged around the high-pressure pipe 7. The sleeve 16 is attached to the high-pressure pipe 7. The high-pressure pipe 7 is provided with an external thread 19 and the sleeve 16 is provided with an internal thread 20 that can be engaged with the thread 19 of the high-pressure pipe 7. The sleeve 16 is arranged in the proximity of the first end of the high-pressure pipe 7.

In the embodiment of figures 2 to 5, the protector element 12 is not directly attached to the high-pressure pipe 7. Instead, the protector element 12 is attached to the high-pressure pipe 7 via the sleeve 16. The pipe assembly is provided with a groove 28 for allowing attachment of the protector element 12. The attachment portion 13 can be engaged with the groove 28. The groove 28 is arranged in the sleeve 16, which is attached to the high-pressure pipe 7. As the protector element 12 is pushed around the sleeve 16 towards the second end of the high-pressure pipe 7, the attachment portion 13 of the protector element 12 eventually snaps into the groove 28 and secures the protector element 12 to the sleeve 16.

The pipe assembly further comprises a mounting sleeve 21. The mounting sleeve 21 is arranged around the high-pressure pipe 7 and the outer pipe 17. An end of the mounting sleeve 21 is provided with an external thread 22. The thread 22 of the mounting sleeve 21 can be engaged with an internal thread 23, which is arranged in a connector piece 6 or in some other component of the fluid system. The sleeve 16 comprises a conical clamping surface 24, which tapers towards the second end of the high-pressure pipe 7. The mounting sleeve 21 comprises an internal clamping surface 25, which can be engaged with the clamping surface 24 of the sleeve 16. Via the clamping surfaces 24, 25 force can be applied to the high-pressure pipe 7 for pushing the high-pressure pipe 7 against the connector piece 6.

In the embodiment of figures 2 to 5, the protector element 12 is arranged at the end of the sleeve 16. When the pipe assembly is connected to a connector piece 6, the protector element 12 protects the sealing surface 11 of the high-pressure pipe 7. The pipe assembly is attached to the connector piece 6 by first aligning the sealing surface 11 of the high-pressure pipe 7 with a sealing surface 26 of the connector piece 6. As the pipe assembly is pressed against the connector piece 6, the protector element 12 is compressed between the sleeve 16 and the connector piece 6. The compressing of the protector element 12 reveals the sealing surface 11 of the high-pressure pipe 7 and allows it to be connected with the sealing surface 26 of the connector piece 6. The thread 22 of the mounting sleeve 21 is then engaged with the thread 23 of the connector piece 6. As the mounting sleeve 21 is rotated, the clamping surface 24 of the sleeve 16 is engaged with the clamping surface 25 of the mounting sleeve 21. The pipe assembly is thus firmly attached to the connector piece 6.

For disconnecting the pipe assembly from the connector piece 6, the mounting sleeve 21 is rotated in an opposite direction. When the mounting sleeve 21 is disengaged from the connector piece 6, the pipe assembly can be disconnected. As the pipe assembly is moved outwards from the connector piece 6, the protector element 12 is allowed to lengthen. It thus covers the sealing surface 11 of the high-pressure pipe 7.

The sleeve 16 of the pipe assembly comprises grooves 29, which extend from the outer surface of the sleeve 16 to the inner surface. The grooves 29 extend to the second end of the sleeve 16. Via the grooves 29, the leakage channel 18 between the high-pressure pipe 7 and the outer pipe 17 is arranged in fluid communication with a leakage channel (not shown) of the connector piece 6.

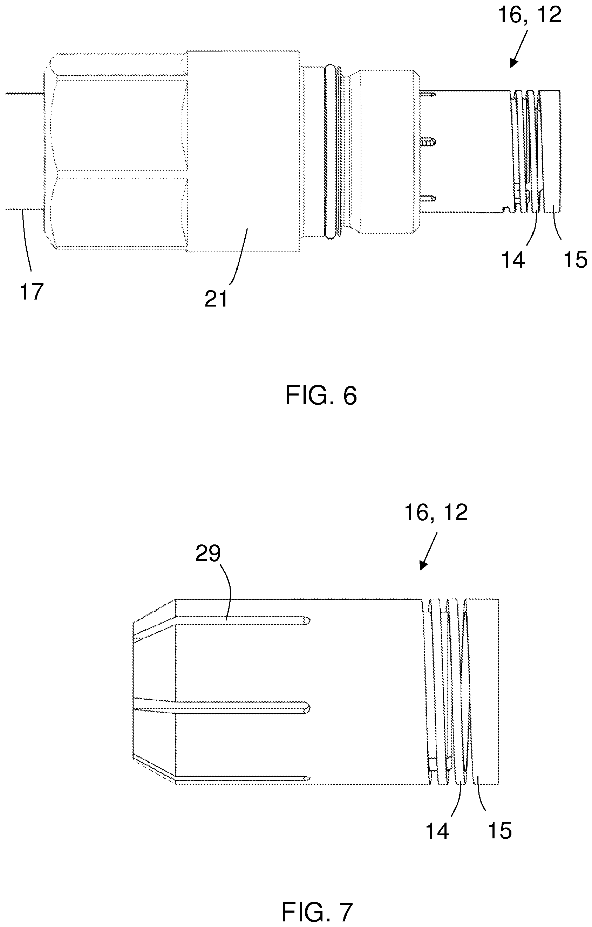

Figures 6 and 7 show another embodiment of the invention. The embodiment of figures 6 and 7 differs from the embodiment of figures 2-5 in that the protector element 12 is an integral part of the sleeve 16. The sleeve 16 and the protector element 12 are thus made as a single piece. Instead of the unitary structure of the sleeve 16 and the protector element 12 shown in figures 6 and 7 and the snap attachment of figures 2-5, many different ways of attaching the protector element 12 to the sleeve 16 could be used. For example, the protector element 12 could be glued to the sleeve 16 or a friction joint or press fit could be used. The protector element 12 could also be attached directly to the high-pressure pipe 7.

In the embodiments of the figures, the protector element 12 is made of steel. However, the protector element 12 could also be made of some other material, such as a plastic material. The material does not have to withstand significant pressures, but, depending on the application, it may need to be heat resistant and resistant to the fluid used in the fluid system.

It will be appreciated by a person skilled in the art that the invention is not limited to the embodiments described above, but may vary within the scope of the appended claims.

## Claims

1. A pipe assembly for a high-pressure fluid system, the pipe assembly comprising a high-pressure pipe (7) for carrying a high-pressure fluid, the high-pressure pipe (7) having a first end and a second end, the first end of the high-pressure pipe (7) being provided with an external sealing surface (11) encircling the first end of the high-pressure pipe (7), the pipe assembly comprising a protector element (12), which is arranged around the first end of the high-pressure pipe (7) for covering the sealing surface (11) and configured to yield for revealing the sealing surface (11) when the protector element (12) is compressed in the longitudinal direction of the high-pressure pipe (7), **characterized in that** the protector element (12) comprises a spring portion (14).

2. A pipe assembly according to claim 1, wherein the second end of the high-pressure pipe (7) is provided with an external sealing surface (11) encircling the second end of the high-pressure pipe (7), and the pipe assembly comprises a protector element (12), which is arranged around the second end of the high-pressure pipe (7) for covering the sealing surface (11) and configured to yield for revealing the sealing surface (11) when the protector element (12) is compressed in the longitudinal direction of the high-pressure pipe (7).

3. A pipe assembly according to claim 1 or 2, wherein the protector element (12) extends in the longitudinal direction of the high-pressure pipe (7) over the whole sealing surface (11) when not being compressed.

4. A pipe assembly according to any of claims 1 to 3, wherein the protector element (12) is a cylindrical part.

5. A pipe assembly according to any of the preceding claims, wherein the protector element (12) comprises a portion (14) that forms a helical spring.

6. A pipe assembly according to any of the preceding claims, wherein the protector element (12) forms part of a sleeve (16) that is attached to the high-pressure pipe (7).

7. A pipe assembly according to claim 6, wherein the protector element (12) is a unitary part of the sleeve (16).

8. A pipe assembly according to claim 6, wherein the protector element (12) is a separate part attached to the sleeve (16).

9. A pipe assembly according to any of claims 6 to 8, wherein the sleeve (16) is configured to transmit a clamping force to the high-pressure pipe (7) for holding the sealing surface (11) of the high-pressure pipe (7) against an adjacent sealing surface (26).

10. A pipe assembly according to any of claims 6 to 9, wherein the pipe assembly comprises an outer pipe (17) that is arranged around the high-pressure pipe (7) and a leakage channel (18) that is formed between the high-pressure pipe (7) and the outer pipe (17), and the sleeve (16) is configured to establish fluid communication between the leakage channel (18) between the high-pressure pipe (7) and the outer pipe (17) and a leakage channel that is formed in an adjacent component (6) of the fluid system.

11. A fuel injection system for a piston engine, **characterized in that** the fuel injection system comprises a pipe assembly according to any of the preceding claims.

12. A fuel injection system according to claim 11, wherein the pipe assembly is connected to a connector piece (6) that is provided with a sealing surface (26).

13. A method for connecting a pipe assembly according to any of claims 1-10 in a high-pressure fluid system to an adjacent component (6) that is provided with a sealing surface (26), the method comprising the steps of
- aligning the sealing surface (11) of the high-pressure pipe (7) with the sealing surface (26) of the adjacent component (6),
- arranging the protector element (12) against the adjacent component (6),
- pushing the pipe assembly in the longitudinal direction of the high-pressure pipe (7) for compressing the spring portion (14) of the protector element (12), and
- attaching the pipe assembly to the adjacent component (6).

## Patentansprüche

1. Rohranordnung für ein Hochdruckfluidsystem, wobei die Rohranordnung ein Hochdruckrohr (7) zum Befördern eines Hochdruckfluids umfasst, wobei das Hochdruckrohr (7) ein erstes Ende und ein zweites Ende aufweist, wobei das erste Ende des Hochdruckrohrs (7) mit einer äußeren Abdichtungsfläche (11) versehen ist, die das erste Ende des Hochdruckrohrs (7) umgibt, wobei die Rohranordnung ein Schutzelement (12) umfasst, das um das erste Ende des Hochdruckrohrs (7) zum Abdecken der Abdichtungsfläche (11) angeordnet ist und zum Nachgeben zum Offenlegen der Abdichtungsfläche (11) konfiguriert ist, wenn das Schutzelement (12) in der Längsrichtung des Hochdruckrohrs (7) zusammengedrückt wird, **dadurch gekennzeichnet, dass** das Schutzelement (12) einen Federabschnitt (14) umfasst.

2. Rohranordnung nach Anspruch 1, wobei das zweite Ende des Hochdruckrohrs (7) mit einer äußeren Abdichtungsfläche (11) versehen ist, die das zweite Ende des Hochdruckrohrs (7) umgibt, und die Rohranordnung ein Schutzelement (12) umfasst, das um das zweite Ende des Hochdruckrohrs (7) zum Abdecken der Abdichtungsfläche (11) angeordnet ist und zum Nachgeben zum Offenlegen der Abdichtungsfläche (11) konfiguriert ist, wenn das Schutzelement (12) in der Längsrichtung des Hochdruckrohrs (7) zusammengedrückt wird.

3. Rohranordnung nach Anspruch 1 oder 2, wobei das Schutzelement (12) in der Längsrichtung des Hochdruckrohrs (7) über die gesamte Abdichtungsfläche (11) hinweg verläuft, wenn es nicht zusammengedrückt ist.

4. Rohranordnung nach einem der Ansprüche 1 bis 3, wobei das Schutzelement (12) ein zylindrisches Teil ist.

5. Rohranordnung nach einem der vorhergehenden Ansprüche, wobei das Schutzelement (12) einen Abschnitt (14) umfasst, der eine Schraubenfeder ausbildet.

6. Rohranordnung nach einem der vorhergehenden Ansprüche, wobei das Schutzelement (12) einen Teil einer Muffe (16) ausbildet, die am Hochdruckrohr (7) angebracht ist.

7. Rohranordnung nach Anspruch 6, wobei das Schutzelement (12) ein einstückiger Teil der Muffe (16) ist.

8. Rohranordnung nach Anspruch 6, wobei das Schutzelement (12) ein separates Teil ist, das an der Muffe (16) angebracht ist.

9. Rohranordnung nach einem der Ansprüche 6 bis 8, wobei die Muffe (16) zum Übertragen einer Einspannkraft auf das Hochdruckrohr (7) zum Halten der Abdichtungsfläche (11) des Hochdruckrohrs (7) an einer benachbarten Abdichtungsfläche (26) konfiguriert ist.

10. Rohranordnung nach einem der Ansprüche 6 bis 9, wobei die Rohranordnung ein Außenrohr (17), das um das Hochdruckrohr (7) herum angeordnet ist, und einen Auslaufkanal (18) umfasst, der zwischen dem Hochdruckrohr (7) und dem Außenrohr (17) ausgebildet ist, und wobei die Muffe (16) zum Herstellen von Fluidverbindung zwischen dem Auslaufkanal (18) zwischen dem Hochdruckrohr (7) und dem Außenrohr (17) und einem Auslaufkanal, der in einer benachbarten Komponente (6) des Fluidsystems ausgebildet ist, konfiguriert ist.

11. Kraftstoffeinspritzsystem für einen Kolbenmotor, **dadurch gekennzeichnet, dass** das Kraftstoffeinspritzsystem eine Rohranordnung nach einem der vorhergehenden Ansprüche umfasst.

12. Kraftstoffeinspritzsystem nach Anspruch 11, wobei die Rohranordnung mit einem Verbindungsstück (6) verbunden ist, das mit einer Abdichtungsfläche (26) versehen ist.

13. Verfahren zum Verbinden einer Rohranordnung nach einem der Ansprüche 1 - 10 in einem Hochdruckfluidsystem mit einer benachbarten Komponente (6), die mit einer Abdichtungsfläche (26) versehen ist, das Verfahren umfassend die Schritte des
- Ausrichtens der Abdichtungsfläche (11) des Hochdruckrohrs (7) an der Abdichtungsfläche (26) der benachbarten Komponente (6),
- Anordnens des Schutzelements (12) an der benachbarten Komponente (6),
- Schiebens der Rohranordnung in der Längsrichtung des Hochdruckrohrs (7) zum Zusammendrücken des Federabschnitts (14) des Schutzelements (12), und
- Anbringens der Rohranordnung an der benachbarten Komponente (6).

## Revendications

1. Ensemble tuyau pour un système de fluide haute pression, l'ensemble tuyau comprenant un tuyau haute pression (7) pour véhiculer un fluide haute pression, le tuyau haute pression (7) ayant une première extrémité et une deuxième extrémité, la première extrémité du tuyau haute pression (7) étant dotée d'une surface d'étanchéité extérieure (11) entourant la première extrémité du tuyau haute pression (7), l'ensemble tuyau comprenant un élément protecteur (12) qui est disposé autour de la première extrémité du tuyau haute pression (7) pour recouvrir la surface d'étanchéité (11) et est configuré pour céder pour révéler la surface d'étanchéité (11) lorsque l'élément protecteur (12) est comprimé dans la direction longitudinale du tuyau haute pression (7), **caractérisé en ce que** l'élément protecteur (12) comprend une partie de ressort (14).

2. Ensemble tuyau selon la revendication 1, dans lequel la deuxième extrémité du tuyau haute pression (7) est dotée d'une surface d'étanchéité extérieure (11) entourant la deuxième extrémité du tuyau haute pression (7), et l'ensemble tuyau comprend un élément protecteur (12) qui est disposé autour de la deuxième extrémité du tuyau haute pression (7) pour recouvrir la surface d'étanchéité (11) et est configuré pour céder pour révéler la surface d'étanchéité (11) lorsque l'élément protecteur (12) est comprimé dans la direction longitudinale du tuyau haute pression (7).

3. Ensemble tuyau selon la revendication 1 ou 2, dans lequel l'élément protecteur (12) s'étend dans la direction longitudinale du tuyau haute pression (7) sur toute la surface d'étanchéité (11) lorsque non comprimé.

4. Ensemble tuyau selon l'une quelconque des revendications 1 à 3, dans lequel l'élément protecteur (12) est une partie cylindrique.

5. Ensemble tuyau selon l'une quelconque des revendications précédentes, dans lequel l'élément protecteur (12) comprend une partie (14) qui forme un ressort hélicoïdal.

6. Ensemble tuyau selon l'une quelconque des revendications précédentes, dans lequel l'élément protecteur (12) fait partie d'un manchon (16) fixé au tuyau haute pression (7).

7. Ensemble tuyau selon la revendication 6, dans lequel l'élément protecteur (12) est une partie unitaire du manchon (16).

8. Ensemble tuyau selon la revendication 6, dans lequel l'élément protecteur (12) est une partie séparée fixée au manchon (16).

9. Ensemble tuyau selon l'une quelconque des revendications 6 à 8, dans lequel le manchon (16) est configuré pour transmettre une force de serrage au tuyau haute pression (7) pour maintenir la surface d'étanchéité (11) du tuyau haute pression (7) contre une surface d'étanchéité adjacente (26).

10. Ensemble tuyau selon l'une quelconque des revendications 6 à 9, dans lequel l'ensemble tuyau comprend un tuyau extérieur (17) disposé autour du tuyau haute pression (7) et un canal de fuite (18) qui est formé entre le tuyau haute pression (7) et le tuyau extérieur (17), et le manchon (16) est configuré pour établir une communication fluidique entre le canal de fuite (18) entre le tuyau haute pression (7) et le tuyau extérieur (17) et un canal de fuite qui est formé dans un élément adjacent (6) du système de fluide.

11. Système d'injection de carburant pour un moteur à piston, **caractérisé en ce que** le système d'injection de carburant comprend un ensemble tuyau selon l'une quelconque des revendications précédentes.

12. Système d'injection de carburant selon la revendication 11, dans lequel l'ensemble tuyau est raccordé à une pièce de raccord (6) dotée d'une surface d'étanchéité (26).

13. Procédé pour raccorder un ensemble tuyau selon l'une quelconque des revendications 1 - 10 dans un système de fluide haute pression à un élément adjacent (6) qui est doté d'une surface d'étanchéité (26), le procédé comprenant les étapes suivantes :
- l'alignement de la surface d'étanchéité (11) du tuyau haute pression (7) avec la surface d'étanchéité (26) de l'élément adjacent (6),
- l'agencement de l'élément protecteur (12) contre l'élément adjacent (6),
- la poussée de l'ensemble tuyau dans la direction longitudinale du tuyau haute pression (7) pour comprimer la partie de ressort (14) de l'élément protecteur (12), et
- la fixation de l'ensemble tuyau à l'élément adjacent (6).
